# EUROPEAN PATENT APPLICATION

(11) **EP 4 057 104 A1**
(43) Date of publication of application: **14.09.2022**
(21) Application number: 22159789.1
(22) Date of filing: 02.03.2022
(51) Int. Cl.: G05G 1/12, G05G 1/50

(54) **A ROTARY KNOB ASSEMBLY FOR HOUSEHOLD APPLIANCES**

(30) Priority: 12.03.2021 TR 202104672; 10.05.2021 TR 202107885
(71) Applicant: BSH Hausgeräte GmbH, 81739 München (DE)
(72) Inventor: Bakla, Ismail Mert, Istanbul (TR); Sen, Gizem, Istanbul (TR); Güleç, Koray, Tekirdag (TR); Mumcu, Yahya, Istanbul (TR)

(57) **Abstract**

A rotary knob assembly (3) for assembling to a control panel (2) of a household appliance (1) comprising a knob shaft (31) for assembling to the control panel (2) of the household appliance (1) and a shell ring portion (32) for gripping. As an improvement, the knob shaft (31) and the shell ring portion (32) are molded together.

## Description

### Technical Field

The present invention relates to a rotary knob assembly for household appliances such as washing machines, dishwashers or cooking appliances.

### Prior Art

Rotary knobs are found in many household appliances such as washing machine, dishwasher and cooking appliances. The rotary knobs are usually found on the control panel or display panel, which is usually disposed on the front panel of the household appliance. The user can choose the operating program for the machine by rotating the knob such as washing programs for washing machines or cooking program for ovens.

The complex structure of rotary knobs is inconvenient for many manufacturers. Commonly, a regular rotary knob comprises multiple layers and materials thereof. These multiple layers of the rotary knob require multiple and various assembly operations and therefore are costly to the manufacturer. In addition to the costs, the existing structure of the rotary knobs are prone to dismantling after many uses by the household appliance user. By using existing assembling options such as snap fitting or gluing, the cap or the top part of the rotary knob where the user interaction is provided can easily come off its socket or may broke.

The document WO2017152945A1 discloses a rotary knob for use on the control panel of a household appliance. The rotary knob of the present invention comprises: a first component, a second component and a third component which are provided separately and adapted to fit together; a resilient claw formed onto the first component , wherein the resilient claw has an undercut; a first abutment formed onto the second component and adapted to abut against the undercut of the resilient claw when the first component and the second component are fitted together; a second abutment formed onto the third component and adapted to block the movement of the resilient claw away from the first abutment when the third component is fitted together with the first component and the second component.

The invention provides an additional improvement, an additional advantage or an alternative to the prior art.

### Brief Description of the Invention

An objective of the present invention is to alleviate the defects existing in the prior art. Another object of the invention is to provide a rotary knob assembly, which is produced with less steps of production process while providing more secure connection regarding the body and the structure.

Furthermore, another object of the invention is to provide a safer and more durable rotary knob assembly for household appliances.

In order to achieve the objects, the invention is a rotary knob assembly for assembling to a control panel of a household appliance comprising a knob shaft for assembling to the control panel of the household appliance and a shell ring portion for gripping. As an improvement, the knob shaft and the shell ring portion are molded together. Thus, the connection between the parts of the rotary knob assembly is provided in a robust and secure manner. By molding two parts together, additional steps of production and fastening of the parts are eliminated. Therefore, the manufacturer needs less material in order to produce a rotary knob. In addition, the problem of dismantling after many usages is eliminated by providing an integral rotary knob assembly.

In a possible embodiment of the invention, the knob shaft and the shell ring portion are assembled together by means of over injection molding. Thus, the connection between the knob shaft and the shell ring portion is more stable and strong. Therefore, the rotary knob assembly is more durable and the safety for the user is provided. Because the rotary knob assembly is produced with less layers, less material is needed for production. Hence, the production costs are reduced along with an environmentally friendly production option is provided.

In a possible embodiment of the invention, the knob shaft has at least one arm for supporting the shell ring portion. In another possible embodiment of the invention, the knob shaft comprise four arms for combining to the shell ring portion. Thus, the knob shaft properly supports and connects to the shell ring portion during the over injection molding process.

In a possible embodiment of the invention, the arms of the knob shaft are configured as an X shape. Thus, the knob shaft supports and reinforces the shell ring portion from every angle.

In a possible embodiment of the invention, the knob shaft has a protruding part for integrating to the shell ring portion. Thus, the connection of the knob shaft to the shell ring portion is reinforced. Therefore, the rotary knob assembly is provided in a more secure and safe manner.

In a possible embodiment of the invention, the protruding part of the knob shaft has a longitudinal part and a vertical part. The combination of the longitudinal part and the vertical part is provided with a 90-degree angle so that the longitudinal part and the vertical part create an L shape. Thus, the structure of the rotary knob assembly is stronger. Therefore, dismantling problem after many usages is prevented.

In a possible embodiment of the invention, the shell ring portion comprises an outer ring for combining to the protruding part of the knob shaft. Thus, the outer ring not only provides a secure and strong connection for the rotary knob assembly but also provides a comfortable and firm grip to for the user for turning the rotary knob.

In a possible embodiment of the invention, the shell ring portion is chrome plated. Thus, the surface hardness is increased and corrosion resistance for the rotary knob assembly is provided.

In a possible embodiment of the invention, the household appliance comprises the rotary knob assembly. Thus, the user is able to control the household appliance in a secure manner for many usages.

In a possible embodiment of the invention, the household appliance is a washing machine, a dishwasher, or a cooking device. Thus, such household appliances are provided with a firm and durable rotary knob assembly on the control panel.

In this context, with the indications "top", "bottom", "front", "rear", "horizontal", "vertical", "upward", "downward", "inner", "outer", "inward", "outward" etc. the positions and orientations given for intended use and intended arrangement of the household appliance and for a user then standing in front of the household appliance in a closed position and viewing in the direction of the device are indicated.

Each possible embodiment disclosed in this text can be combined with the other possible embodiments disclosed in this text if there is no any technical constraint.

### Explanation of Figures

The figures, whose brief explanations are herewith provided, are solely intended for providing a better understanding of the present invention and are as such not intended to define the scope of protection or the context in which said scope is to be interpreted in the absence of the description.
Fig. 1 is an isometric view of the household appliance according to present invention.
Fig. 2 is a cross-sectional view of the control panel of the household appliance according to present invention.
Fig. 3 is an exploded view of the rotary knob assembly according to the present invention.
Fig. 4 is an isometric view of the shell ring portion of the rotary knob assembly according to the present invention
Fig. 5 is an isometric view of the rotary knob assembly according to the present invention.

### Detailed Description of the Figures

In this detailed description, the subject matter is explained with references to examples without forming any restrictive effect only in order to make the subject more understandable.

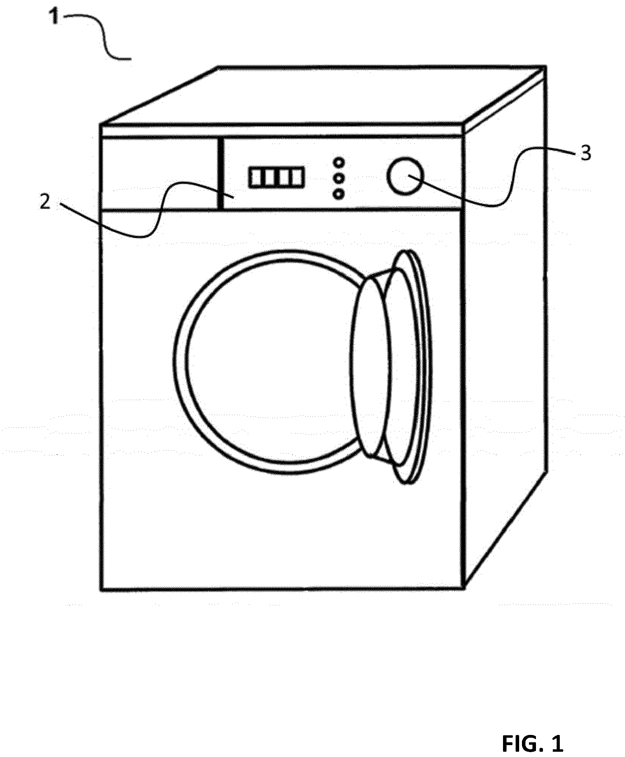

As shown in the Fig.1, the household appliance (1) is a washing machine. It is known that household appliances (1) such as washing machine, dishwasher, cooking and cooling appliances comprise at least one rotary knob assembly (3) for user to control the device. Usually such rotary knobs (3) are placed on the control panel (2) on the front panel (not shown on the figures) of the household appliance (1). Hence, the user can easily access to the rotary knob (3) in order to select the desired program for the household appliance (1) to function.

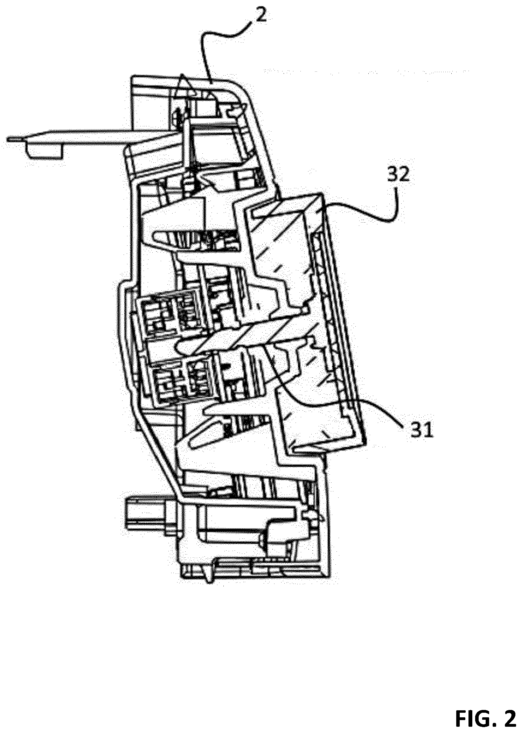

As displayed on Fig.2, the rotary knob assembly (3) is mounted to the control panel (2) of the household appliance (1). The rotary knob assembly (3) is disposed on the control panel (2) on the front panel of the household appliance (1). The control panel (2) is provided with a mounting hole (not shown on the figures) which corresponds to the length of the knob shaft (31) of the rotary knob assembly (3). The mounting hole receives the knob shaft (31). The shell ring portion (32) is disposed on the surface of the control panel (2) in order for user to rotate and select the desired washing program.

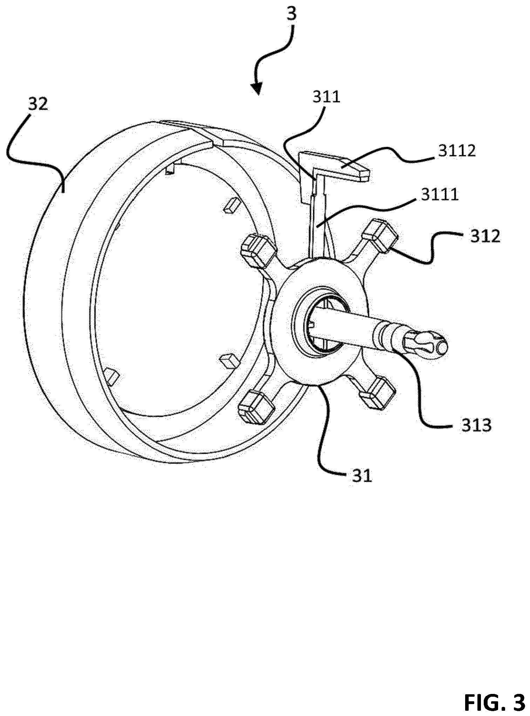

As shown in Fig.3, the rotary knob assembly (3) comprises two parts; a knob shaft (31) and a shell ring portion (32). Shell ring portion (32) is where the user interacts with the rotary knob assembly (3) by rotating and selecting the proper program. The shell ring portion (32) can have circular or angular shape. Preferably, the shell ring portion (32) is chrome plated.

The knob shaft (31) comprises a knob shaft body (313) which extends for mounting on the control panel (2). The knob shaft (31) further comprises arms (312). In a preferred embodiment, the knob shaft (31) comprises four arms (312) for properly connecting to and supporting the shell ring portion (32). The knob shaft (31) may comprise more than four arms (312). The arms of the knob shaft (312) preferably extend away from the knob shaft body (313) in order to create an X shape for supporting the shell ring portion (32) from all sides and corners when assembled together. The arms of the knob shaft (312) are embodied at an equal distance to each other.

In addition to the arms of the knob shaft (312), the knob shaft (31) also comprises a protruding part (311) which extends substantially further and longer than the arms of the knob shaft (312). The protruding part (311) also extends away from the knob shaft body (313). The protruding part (311) comprise a longitudinal part (3111) and a vertical part (3112). The longitudinal part (3111) is substantially longer than the vertical part (3112). The longitudinal part (3111) and the vertical part (3112) are coupled by forming a 90-degree angle so that the longitudinal part (3111) and the vertical part (3112) create an L shape. Therefore, the protruding part (311) elongates in an L shape for combining to the shell ring portion (32).

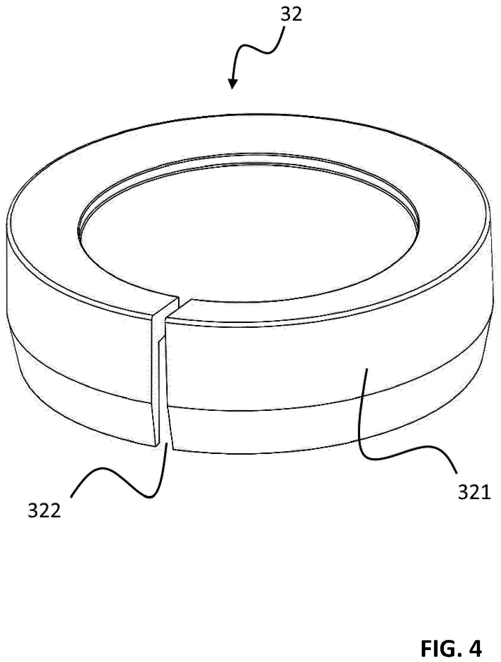

As Fig. 4 shows, the shell ring portion (32) has an outer ring (321) for providing the user a firm and comfortable grip. The shell ring portion (32) can have a round or an angular shape. The shell ring portion (32) also comprises a cutout (322) on the outer ring (321) in the longitudinal direction. The cutout (322) is an opening for the protruding part (311) of the knob shaft (31) to combine during over injection molding process. The size of the cutout (322) corresponds to the size and length of the vertical part (3112) of the protruding part (311). The shell ring portion (32) is made of acrylonitrile butadiene styrene ABS material.

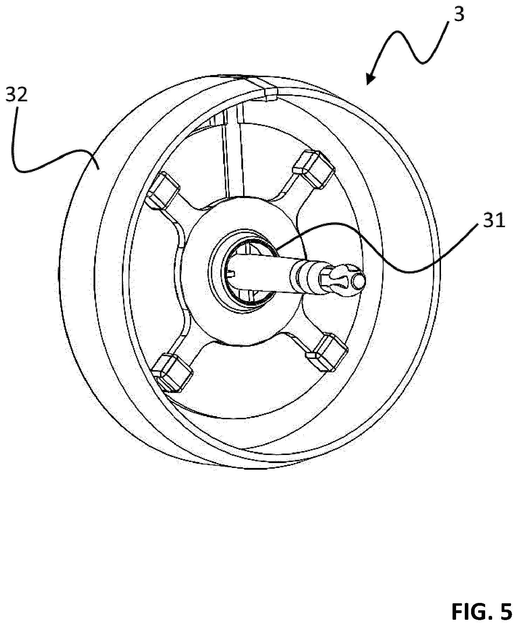

Fig. 5 shows, the rotary knob assembly (3) mounted in one piece. The shell ring portion (32) and the knob shaft (31) are mounted together by means of over injection molding. The plastic material of the shell ring portion (32) is over molded on the knob shaft (31) which is made of metal material.

### Reference List

- 1: Household appliance
- 2: Control panel
- 3: Rotary knob assembly
31 Knob shaft
311 Protruding part
3111 Longitudinal part
3112 Vertical part
312 Arm of the knob shaft
313 Knob shaft body
32 Shell ring portion
321 Outer ring
322 Cutout

## Claims

1. A rotary knob assembly (3) for assembling to a control panel (2) of a household appliance (1) comprising a knob shaft (31) for assembling to the control panel (2) of the household appliance (1) and a shell ring portion (32) for gripping **characterized in that** the knob shaft (31) and the shell ring portion (32) are molded together.

2. The rotary knob assembly (3) according to claim 1, wherein the knob shaft (31) and the shell ring portion (32) are assembled together by means of over injection molding.

3. The rotary knob assembly (3) according to claim 1, wherein the knob shaft (31) comprise at least one arm (312) for supporting the shell ring portion (32).

4. The rotary knob assembly (3) according to claim 1, wherein the knob shaft (31) comprise four arms (312) for combining to the shell ring portion (32).

5. The rotary knob assembly (3) according to claim 4, wherein the arms of the knob shaft (312) are configured as an X shape.

6. The rotary knob assembly (3) according to claim 1, wherein the knob shaft (31) has a protruding part (311) for integrating to the shell ring portion (32).

7. The rotary knob assembly (3) according to claim 6, wherein the protruding part (311) of the knob shaft (31) has a longitudinal part (3111) and a vertical part (3112).

8. The rotary knob assembly (3) according to claim 1, wherein the shell ring portion (32) comprises an outer ring (321) for combining to the protruding part (311) of the knob shaft (31).

9. The rotary knob assembly (3) according to claim 1, wherein the shell ring portion (32) is chrome plated.

10. A household appliance (1) according to claim 1, wherein the household appliance (1) comprises the rotary knob assembly (3).

11. The household appliance (1) according to claim 10, wherein the household appliance (1) is a washing machine, a dishwasher, or a cooking device.
